# EUROPEAN PATENT APPLICATION

(11) **EP 4 385 606 A2**
(43) Date of publication of application: **19.06.2024**
(21) Application number: 23207620.8
(22) Date of filing: 03.11.2023
(51) Int. Cl.: B01D 46/00, B01D 46/24

(54) **LIQUID SEPARATION CONSTITUENT, LIQUID SEPARATION FILTER, COMPRESSOR SYSTEM, AND METHOD OF PRODUCING LIQUID SEPARATION FILTER HAVING MULTILAYER STRUCTURE**

(30) Priority: 14.12.2022 JP 2022199405
(71) Applicant: KABUSHIKI KAISHA KOBE SEIKO SHO (KOBE STEEL, LTD.), Hyogo 651-8585 (JP)
(72) Inventor: NAKAMOTO, Yuya, Takasago-shi, 676-8670 (JP)
(74) Representative: TBK

(57) **Abstract**

A liquid separation constituent is used with being attached to a top plate to and from which a first element portion is attachable and detachable, and includes a second element portion having a fiber layer, an annular first attachment portion to which an upper end portion of the second element portion is attached, and a second attachment portion to which a lower end portion of a second element portion is attached. The first element portion includes an abutting portion abutting on the top plate and an insertion portion inserted into a through hole of the top plate. The first attachment portion includes a hole portion into which the insertion portion of the first element portion removed from the top plate is insertable, and an annular abutting portion abutting on a lower surface of the top plate from which the first element portion is removed.

## Description

### FIELD OF INVENTION

The present invention relates to a liquid separation constituent, a liquid separation filter, a compressor system, and a method of producing a liquid separation filter having a multilayer structure.

### BACKGROUND ART

In recent years, in consideration of the environment, use of hydrogen for power generation and as fuel for an automobile, and the like is considered, and demand for hydrogen is increasing. Further, as disclosed in JP 2017-133391 A, an oil separation filter is known to be used in a compressor of an oil injection type that compresses gas. The oil separation filter is disposed on the downstream side of the compressor and used to separate oil from gas compressed by the compressor. The oil separation filter has a configuration in which an oil separation filter core is housed in a housing container. In a mist filter of JP 2009-226322 A, a sheet layer for transporting a mist condensate to the outside is provided in a lower part of an outer layer portion of a filter layer including a collection layer and an aggregate layer. With this configuration, re-scattering of mist can be prevented.

A liquid separation filter core that separates liquid such as oil or water in gas from the gas may include an element portion having a fiber layer. In this case, there is a demand for improving liquid separation performance of the element portion in an existing liquid separation filter.

### SUMMARY OF THE INVENTION

An object of the present invention is to improve liquid separation performance of an element portion in an existing liquid separation filter.

A liquid separation constituent according to the present invention is a liquid separation constituent used with being attached to a top plate. The liquid separation constituent includes a second element portion having a tubular shape and including a fiber layer for separating liquid from gas discharged from a compressor, an annular first attachment portion to which a first end portion of the second element portion is attached, and a second attachment portion to which a second end portion of the second element portion is attached. A first element portion having a fiber layer that separates liquid from gas discharged from the compressor can be attached to and detached from the top plate. The first element portion includes an abutting portion configured to abut on a first surface of the top plate, and an insertion portion detachably inserted into a through hole formed in the top plate. The first attachment portion includes a hole portion configured to receive the insertion portion of the first element portion removed from the top plate, and an annular abutting portion provided around the hole portion and configured to abut on the first surface of the top plate from which the first element portion is removed.

A liquid separation constituent according to the present invention is a liquid separation constituent used with being attached to a top plate. The liquid separation constituent includes a second element portion having a tubular shape and including a second fiber layer which is a fiber layer for separating liquid from gas discharged from a compressor, an annular first attachment portion to which a first end portion of the second element portion is attached, and a second attachment portion to which a second end portion of the second element portion is attached. A first element portion having a first fiber layer that is a fiber layer for separating liquid from gas discharged from the compressor can be attached to and detached from the top plate by a fixture. The first element portion includes a holding portion that holds a first end portion of the first fiber layer. The first attachment portion is disposed between the first element portion and the top plate in a state where restraint on the top plate by the fixture is released, and is configured to be fixed to the top plate by attachment of the holding portion to the top plate by the fixture or one of a same type as the fixture. The liquid separation constituent includes an annular gasket disposed on a surface facing the top plate in the first attachment portion.

A liquid separation filter according to the present invention is a liquid separation filter for separating liquid from gas discharged from a compressor. The liquid separation filter includes a housing container having a gas inlet and a gas outlet, and a liquid separation filter core housed in the housing container. The liquid separation filter core includes a first element portion having a fiber layer, and the liquid separation constituent capable of housing the first element portion in the inside. The second element portion of the liquid separation constituent is disposed so as to surround the first element portion, and is configured to further separate liquid from gas after liquid is separated in the first element portion or to separate liquid from gas before liquid is separated in the first element portion.

A compressor system according to the present invention includes a compressor, a liquid recovery device configured to collect liquid from discharge gas discharged from the compressor, and the liquid separation filter that is provided on the downstream side of the liquid recovery device and configured to separate liquid from the discharge gas.

A method of producing a liquid separation filter having a multilayer structure according to the present invention is a method of producing a liquid separation filter having a multilayer structure by causing a first element portion attached to a top plate to have multiple layers, the first element portion including an insertion portion, an abutting portion, and a fiber layer configured to separate liquid from gas discharged from a compressor. The method includes releasing abutment of the abutting portion on the top plate by removing the insertion portion from the through hole from a state in which the insertion portion of the first element portion is inserted into a through hole formed in the top plate and the abutting portion of the first element portion abuts on a first surface of the top plate, preparing a liquid separation constituent including a second element portion and a first attachment portion to which a first end portion of the second element portion is attached, the first attachment portion having an annular abutting portion, causing the annular abutting portion to abut on the first surface of the top plate, and the abutting portion of the first element portion to abut on the annular abutting portion, so that the first element portion is covered with the second element portion, and holding the first attachment portion between the top plate and the abutting portion of the first element portion.

A method of producing a liquid separation filter having a multilayer structure according to the present invention is a method of producing a liquid separation filter having a multilayer structure by causing a first element portion attached to a top plate to have multiple layers, the first element portion including a fiber layer configured to separate liquid from gas discharged from a compressor. The method includes releasing fixation of the first element portion by a fixture from a state in which the first element portion is located on a first side of the top plate and the first element portion is fixed to the top plate by the fixture, preparing a liquid separation constituent including a second element portion and a first attachment portion to which a first end portion of the second element portion is attached, sandwiching the first attachment portion between the first element portion and the top plate while the first element portion is covered with the second element portion, and at this time, sandwiching an annular gasket between the first attachment portion and the top plate, and the first element portion and the top plate are fixed to each other in a state where the first attachment portion is sandwiched by the fixture or one of a same type as the fixture.

### BRIEF DESCRIPTION OF THE DRAWINGS

Fig. 1 is a cross-sectional view of a liquid separation constituent according to a first embodiment.
Fig. 2 is a cross-sectional view of a liquid separation filter to which the liquid separation constituent is to be attached.
Fig. 3 is a schematic diagram of a compressor system provided with the liquid separation filter.
Fig. 4 is a cross-sectional view of a liquid separation filter core after the liquid separation constituent is attached.
Fig. 5 is a diagram enlarging a periphery of a second attachment portion in the liquid separation filter core.
Fig. 6 is a diagram illustrating a top plate in a state where a first element portion is removed.
Fig. 7 is a diagram illustrating a state in which a second element portion is assembled to the top plate.
Fig. 8 is a diagram illustrating a state in which the first element portion is further assembled to the second element portion assembled to the top plate.
Fig. 9 is a cross-sectional view of a first attachment portion and an upper end holding portion according to a variation of the first embodiment.
Fig. 10 is a cross-sectional view of the first attachment portion and the upper end holding portion according to a variation of the first embodiment.
Fig. 11 is a cross-sectional view of the liquid separation constituent according to a second embodiment.
Fig. 12 is a cross-sectional view of the liquid separation filter to which the liquid separation constituent is to be attached.
Fig. 13 is a diagram illustrating the top plate in a state where the first element portion is removed.
Fig. 14 is a diagram illustrating a state in which the second element portion is assembled to the top plate.
Fig. 15 is a diagram illustrating a state in which the first element portion is further assembled to the second element portion assembled to the top plate.
Fig. 16 is a cross-sectional view of the liquid separation filter core after the liquid separation constituent is attached.
Fig. 17 is a diagram illustrating a state in which the liquid separation filter core in a state of being vertically inverted is attached to the top plate.
Fig. 18 is a diagram for describing attachment of a cap portion to a non-element portion.

### DETAILED DESCRIPTION

Embodiments of the present invention will hereinafter be described in detail with reference to the drawings.

### (First embodiment)

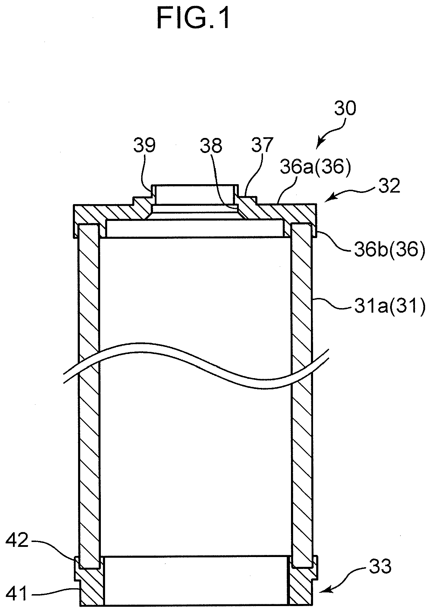

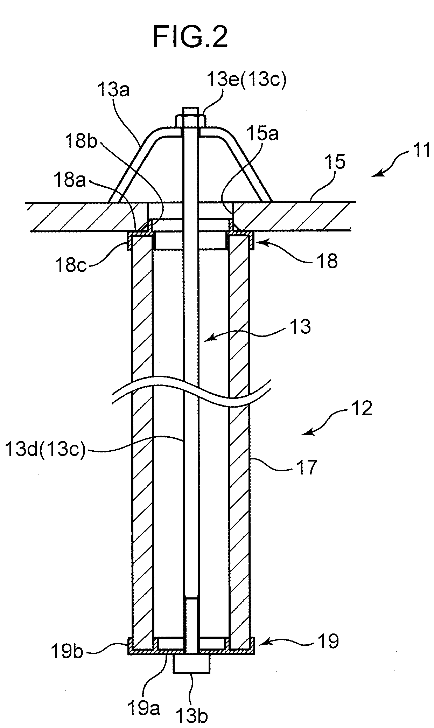

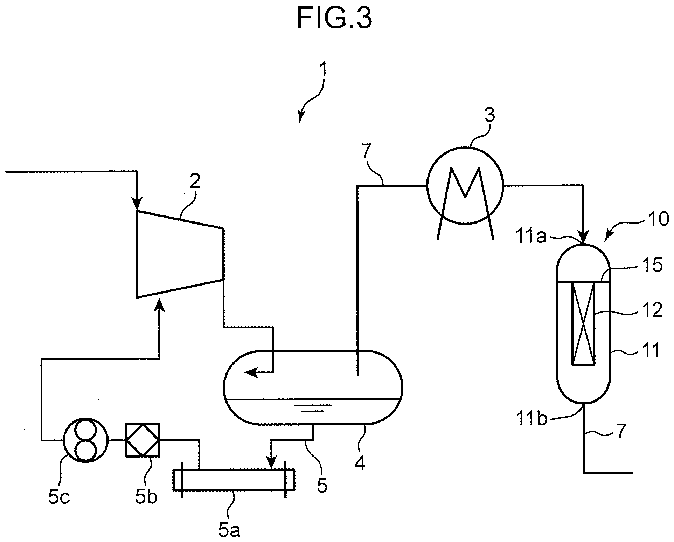

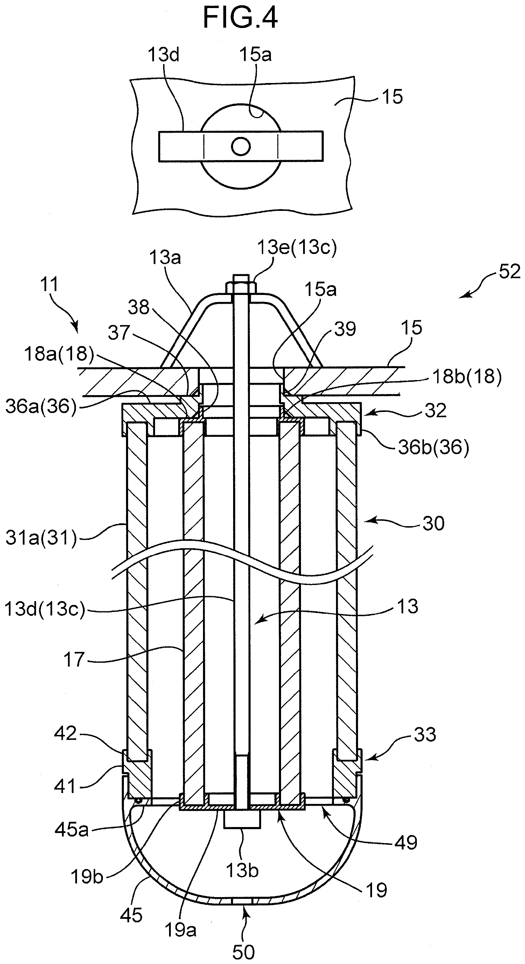

Fig. 1 illustrates a liquid separation constituent 30 according to the present embodiment. The liquid separation constituent 30 is used by being attached to an existing liquid separation filter 10 (Fig. 2). The existing liquid separation filter 10 is provided in, for example, a compressor system 1 illustrated in Fig. 3. By attaching the liquid separation constituent 30 to the liquid separation filter 10, a liquid separation filter core 52 (to be described later) (Fig. 4) in which an element portion of the liquid separation filter 10 is configured to have multiple layers is obtained.

Before description of a configuration of the liquid separation constituent 30 according to the present embodiment, first, the compressor system 1 and the liquid separation filter 10 will be described.

As illustrated in Fig. 3, the compressor system 1 includes a compressor 2, a gas cooler 3 that cools discharge gas discharged from the compressor 2, and the liquid separation filter 10 that separates liquid from discharge gas cooled by the gas cooler 3. As the compressor 2, a screw compressor of an oil feed type or an oilless type is employed. In a case of a screw compressor of an oil feed type, discharged gas contains oil as liquid (liquid other than oil may also be contained). In a screw compressor of an oilless type, in a case where water is poured into the inside, discharged gas contains water as liquid (liquid other than water may also be contained). Note that the compressor 2 is not limited to a screw type. For example, a reciprocating compressor of an oil feed type, a scroll compressor of an oil feed type, or the like may be employed. The compressor 2 can handle various types of gas such as hydrogen gas, natural gas, and refrigerant gas for a refrigerator. A discharge pipe 7 through which gas discharged from the compressor 2 flows is provided with a liquid recovery device 4 that collects liquid from discharge gas.

The liquid recovery device 4 has a structure in which liquid separated from discharge gas can be stored, and liquid stored in the liquid recovery device 4 is returned to the compressor 2 through a recovery path 5. The recovery path 5 may be provided with a liquid cooler 5a, a filter 5b, and a pump 5c. Note that, in the compressor system 1, any one of the liquid cooler 5a, the filter 5b, the pump 5c, and the gas cooler 3 may be omitted.

In the liquid recovery device 4, liquid is removed from gas discharged from the compressor 2. However, a part of liquid contained in the gas may pass through the liquid recovery device 4. For this reason, the liquid separation filter 10 is provided at a portion on the downstream side of the liquid recovery device 4 in the discharge pipe 7.

As illustrated in Figs. 2 and 3, the liquid separation filter 10 includes a housing container 11 (see Fig. 1), a first element portion 12 housed in the housing container 11, and a fixture 13 for fixing the first element portion 12 in the housing container 11. The housing container 11 is provided with a gas inlet 11a through which gas that passes through the gas cooler 3 flows into the housing container 11, and a gas outlet 11b through which gas in the housing container 11 flows out to a supply pipe 8. The gas inlet 11a is disposed at the top of the housing container 11, and the gas outlet 11b is disposed at the bottom or the side of the housing container 11.

A top plate 15 is provided in the housing container 11, and the first element portion 12 is detachably attached to the top plate 15. As illustrated in Fig. 2, a through hole 15a is formed in the top plate 15, and the through hole 15a allows gas introduced into the housing container 11 through the gas inlet 11a to pass toward the lower side of the top plate 15 on which the first element portion 12 is disposed.

The first element portion 12 includes a fiber layer (first fiber layer 17) formed in a cylindrical shape, an upper end holding portion (a first end holding portion) 18 disposed at an upper end (first end portion) of the first fiber layer 17, and a lower end holding portion (a second end holding portion) 19 disposed at a lower end (second end portion) of the first fiber layer 17. The first fiber layer 17 is disposed below the top plate 15 so as to surround the through hole 15a, and allows gas passing through the through hole 15a to pass from the inside to the outside. At this time, the first fiber layer 17 collects liquid contained in the gas. Liquid collected by the first fiber layer 17 accumulates in a lower portion of the first fiber layer 17. Note that cylindrical punching metal or wire mesh may be attached to an outer surface or an inner surface of the first fiber layer 17.

The upper end holding portion 18 includes an abutting portion 18a that abuts on a lower surface of the top plate 15, an insertion portion 18b configured to be insertable into the through hole 15a, and a pair of clamping portions 18c extending downward from the abutting portion 18a and holding the first fiber layer 17. The abutting portion 18a has an upper surface in contact with a lower surface of the top plate 15 and is formed in an annular shape in which a hole having an inner edge along an inner peripheral surface of the through hole 15a is defined. Therefore, even in a state where the abutting portion 18a is disposed along the top plate 15, the abutting portion 18a does not block the through hole 15a.

The insertion portion 18b is formed to protrude upward from an upper surface of the abutting portion 18a. The insertion portion 18b is formed in an annular shape so as to be able to abut on an inner peripheral surface of the through hole 15a. The insertion portion 18b is inserted into the through hole 15a along an inner peripheral surface of the through hole 15a, so that the upper end holding portion 18 is positioned with respect to the through hole 15a.

A pair of the clamping portions 18c protrude downward from an inner end and an outer end of a lower surface of the abutting portion 18a. Each of a pair of the clamping portions 18c has a concentric annular shape. An upper end of the first fiber layer 17 is held as an upper end portion of the first fiber layer 17 is inserted between a pair of the clamping portions 18c.

The lower end holding portion 19 is a member configured to hold a lower end portion of the first fiber layer 17 and block an inner space of the first fiber layer 17 from below. The lower end holding portion 19 has a disk-shaped bottom surface portion 19a and a pair of side surface portions 19b protruding upward from an intermediate portion in a radial direction and an outer end of the bottom surface portion 19a. Each of a pair of the side surface portions 19b has a concentric annular shape. When a lower end portion of the first fiber layer 17 is inserted between a pair of the side surface portions 19b, a lower end of the first fiber layer 17 is held by the lower end holding portion 19.

The fixture 13 includes a first pressing portion 13a abutting on an upper surface of the top plate 15, a second pressing portion 13b abutting on a lower surface of the lower end holding portion 19, and a restraining portion 13c for restraining the first pressing portion 13a and the second pressing portion 13b. The first pressing portion 13a is formed of an elongated plate-like member. The first pressing portion 13a has a central portion in which a hole through which the restraining portion 13c passes through is formed, and a pair of leg portions extending so as to be bent from both ends of the central portion. A lower end of each of the leg portions abuts on an upper surface of the top plate 15, while the central portion is separated from the top plate 15. Therefore, the first pressing portion 13a does not block the through hole 15a of the top plate 15.

The second pressing portion 13b is configured to be attached to a lower end of a shaft portion 13d described later of the restraining portion 13c, and abuts on a lower surface of the bottom surface portion 19a of the lower end holding portion 19.

The restraining portion 13c includes the shaft portion 13d penetrating the through hole 15a of the top plate 15 and an inner space of the first element portion 12, and a pressing portion 13e attached to an upper end of the shaft portion 13d. The upper end of the shaft portion 13d passes through the hole formed at the central portion of the first pressing portion 13a.

The pressing portion 13e is used to press the first pressing portion 13a against the top plate 15, and is attached to an upper end of the shaft portion 13d protruding upward from the hole of the first pressing portion 13a. As the pressing portion 13e is attached to the upper end of the shaft portion 13d, the first pressing portion 13a is pressed against an upper surface of the top plate 15. At this time, the second pressing portion 13b attached to a lower end of the shaft portion 13d presses a lower surface of the lower end holding portion 19. In this manner, the first pressing portion 13a and the second pressing portion 13b are restrained by the restraining portion 13c. In this state, the first element portion 12 is in a state of being fixed to the top plate 15.

In the example of Fig. 2, the pressing portion 13e is configured to be attachable to and detachable from the shaft portion 13d, but instead of this configuration or together with this configuration, the second pressing portion 13b may be configured to be attachable to and detachable from the shaft portion 13d. As at least one of the pressing portion 13e and the second pressing portion 13b is released from the shaft portion 13d, fixation of the first element portion 12 to the top plate 15 can be released. That is, the first element portion 12 is detachably attached to the top plate 15.

As described above, the first element portion 12 attached to the top plate 15 in the housing container 11 has a configuration including a single fiber layer. The first element portion 12 can be configured to have a multiple layers by using the liquid separation constituent 30 according to the present embodiment.

As illustrated in Fig. 1, the liquid separation constituent 30 includes a second element portion 31, a first attachment portion 32 to which an upper end portion of the second element portion 31 is attached, and a second attachment portion 33 to which a lower end portion of the second element portion 31 is attached.

The second element portion 31 has a fiber layer (second fiber layer 31a) for separating liquid from gas, and is formed in a tubular shape having a larger diameter than the first element portion 12 to be attached. Therefore, as described later, when the liquid separation constituent 30 is disposed in the housing container 11, an annular space is formed between the second fiber layer 31a of the second element portion 31 and the first fiber layer 17 of the first element portion 12. Then, in this state, the second fiber layer 31a of the second element portion 31 surrounds the first fiber layer 17 of the first element portion 12. Note that cylindrical punching metal or wire mesh may be attached to an outer surface or an inner surface of the second fiber layer 31a.

The first attachment portion 32 includes an annular holding portion 36 that holds an upper end portion of the second element portion 31, and an annular abutting portion 37 that is located on the inner side in the radial direction of the holding portion 36 and is formed in an annular shape. That is, the holding portion 36 is provided around the annular abutting portion 37.

The holding portion 36 includes a main body portion 36a and a pair of clamping portions 36b protruding downward from an intermediate portion in the radial direction and an outer end of the main body portion 36a. An upper portion of the second element portion 31 is sandwiched by a pair of the clamping portions 36b. Each of the clamping portions 36b is formed in a concentric annular shape, and an inner diameter of the clamping portion 36b located on the inner side in the radial direction of a pair of the clamping portions 36b is larger than an outer diameter of the upper end holding portion 18 of the first element portion 12 to be attached. Therefore, as described later, when the liquid separation constituent 30 is attached to the top plate 15 and the first element portion 12 is assembled to the liquid separation constituent 30, an annular gap having a predetermined width in the radial direction is formed between the first fiber layer 17 of the first element portion 12 and the second fiber layer 31a of the second element portion 31. That is, the holding portion 36 is configured such that a gap is formed between the first element portion 12 to be attached and the second element portion 31 in the radial direction. When the second element portion 31 is separated from the first element portion 12, a gap is also formed between the lower end holding portion 19 of the first element portion 12 and a non-element portion 41 of the second attachment portion 33 described later.

The annular abutting portion 37 has a lower surface flush with a lower surface of the main body portion 36a of the holding portion 36 and has an upper surface one step higher than an upper surface of the main body portion 36a of the holding portion 36. As will be described later, when the liquid separation constituent 30 is attached to the top plate 15, the upper surface of the annular abutting portion 37 abuts on the lower surface of the top plate 15. Since the upper surface of the annular abutting portion 37 is flat, the entire upper surface of the annular abutting portion 37 abuts on the lower surface of the top plate 15 (see Fig. 4).

The first attachment portion 32 has an annular hole portion 38 formed to be recessed from an inner peripheral edge of the annular abutting portion 37. That is, the annular abutting portion 37 is provided around the hole portion 38. The hole portion 38 has a shape recessed toward the outer side in the radial direction from a lower side portion on an inner peripheral surface of the annular abutting portion 37, and includes a top surface and an inner peripheral surface.

An inner diameter of the hole portion 38 is the same as an inner diameter of the through hole 15a of the top plate 15. That is, the hole portion 38 has an inner diameter corresponding to an outer diameter of the insertion portion 18b. For this reason, the insertion portion 18b of the first element portion 12 removed from the top plate 15 can be inserted into the hole portion 38. As will be described later, when the first element portion 12 is assembled to the liquid separation constituent 30 in a state where the liquid separation constituent 30 is attached to the top plate 15, the insertion portion 18b is inserted into the hole portion 38 from below, and at this time, an upper surface of the abutting portion 18a of the upper end holding portion 18 of the first element portion 12 abuts on the lower surface of the annular abutting portion 37. In other words, when the second element portion 31 covers the first element portion 12, the lower surface of the annular abutting portion 37 abuts on the upper surface of the abutting portion 18a of the upper end holding portion 18. Since the lower surface of the annular abutting portion 37 is flat, the upper surface of the abutting portion 18a of the upper end holding portion 18 comes into surface contact with the lower surface of the annular abutting portion 37 (see Fig. 4).

The first attachment portion 32 has an annular positioning portion 39 protruding upward from a portion further on the upper side than the hole portion 38 in an inner peripheral edge of the annular abutting portion 37. The positioning portion 39 is a portion for positioning the first attachment portion 32 with respect to the through hole 15a of the top plate 15, and has an outer diameter corresponding to an inner diameter of the through hole 15a. Therefore, when the positioning portion 39 is inserted into the through hole 15a of the top plate 15, the liquid separation constituent 30 is positioned such that an inner peripheral surface of the annular abutting portion 37 is concentric with an inner peripheral surface of the through hole 15a of the top plate 15. Then, when an upper surface of the annular abutting portion 37 abuts on the lower surface of the top plate 15, the first attachment portion 32 is positioned. Note that the positioning portion 39 can be omitted.

The second attachment portion 33 includes the non-element portion 41 formed in an annular shape and a pair of side surface portions 42 extending in a circumferential direction along an upper surface of the non-element portion 41 and protruding upward from the non-element portion 41, and is configured to sandwich a lower end portion of the second element portion 31 by a pair of the side surface portions 42. The non-element portion 41 is made from a material different from that of the second fiber layer 31a capable of holding liquid. The non-element portion 41 is a portion for disposing a lower end of the second fiber layer 31a of the second element portion 31 at a position higher than a lower end of the first fiber layer 17 of the first element portion 12.

When the liquid separation constituent 30 is attached to the top plate 15, a lower end position of the second fiber layer 31a of the second element portion 31 is higher than a lower end position of the first fiber layer 17 of the first element portion 12. In this case, the non-element portion 41 of the second attachment portion 33 faces a lower end portion of the first fiber layer 17 of the first element portion 12. For this reason, even if liquid scatters from the first element portion 12, the liquid is not held in the second fiber layer 31a, but can flow down along a surface of the non-element portion 41.

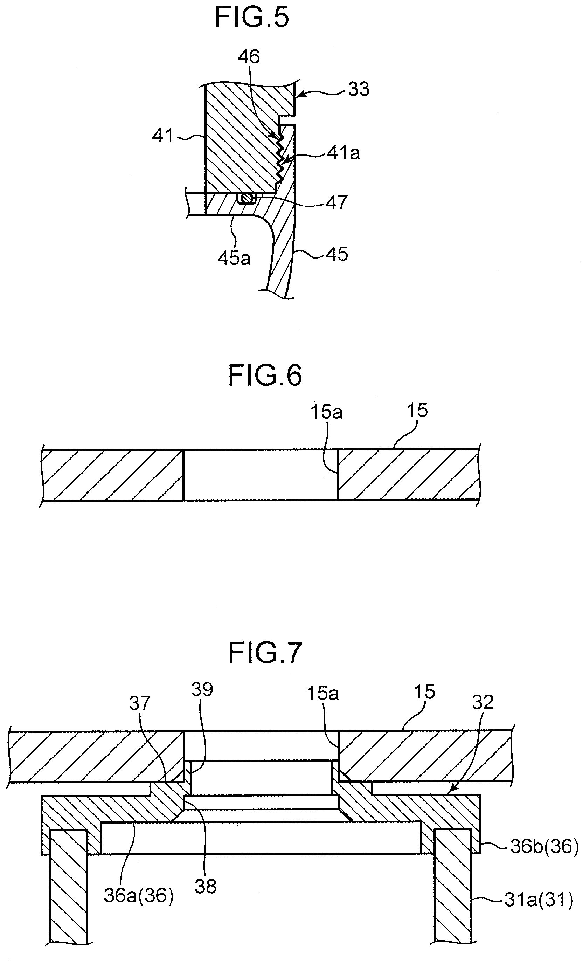

As illustrated in Figs. 4 and 5, the second attachment portion 33 further includes a cap portion 45 screwed to the non-element portion 41. The cap portion 45 can hold liquid that drops from the first element portion 12 inside the cap portion 45. In description below, the cap portion 45 is referred to as the "liquid storage portion 45". The liquid storage portion 45 is preferably designed to have capacity greater than an expected drain accumulation amount during a use period.

The liquid storage portion 45 has a shape recessed downward, and an outer peripheral end portion formed in an annular shape of the liquid storage portion 45 is overlapped with an outer surface of the non-element portion 41. A male screw portion 41a is provided on an outer surface of the non-element portion 41. On the other hand, a female screw portion 46 is provided on an inner peripheral surface of an outer peripheral end portion of the liquid storage portion 45. As the male screw portion 41a and the female screw portion 46 are screwed, the liquid storage portion 45 is fixed to the non-element portion 41.

An outer peripheral end portion of the liquid storage portion 45 is provided with a receiving plate portion 45a extending in a circumferential direction on an inner peripheral surface and protruding toward the inner side. The receiving plate portion 45a is formed in an annular shape and is disposed along a lower surface of the non-element portion 41. A sealing member 47 is provided between an upper surface of the receiving plate portion 45a and a lower surface of the non-element portion 41.

An inner peripheral end of the receiving plate portion 45a is separated from the lower end holding portion 19 of the first element portion 12 to be attached. For this reason, the second attachment portion 33 of the second element portion 31 has an opening portion 49 formed by being separated from the lower end holding portion 19. The opening portion 49 is located immediately below a gap between the first fiber layer 17 of the first element portion 12 to be attached and the second fiber layer 31a of the second element portion 31. The liquid storage portion 45 holds liquid flowing down through the opening portion 49. Note that, since the second attachment portion 33 is separated from the lower end holding portion 19, a lower end portion of the second element portion 31 is not restrained by the first element portion 12.

The liquid storage portion 45 is provided with a discharge mechanism 50 that discharges liquid accumulated in the liquid storage portion 45. Discharge of liquid by the discharge mechanism 50 may be performed at regular time intervals. Alternatively, the discharge mechanism 50 may be configured to grasp an amount of liquid based on weight measurement or detection by a float switch, and discharge liquid in a case where the amount exceeds a threshold.

When the liquid separation constituent 30 configured as described above is added to the first element portion 12, the liquid separation filter 10 includes the housing container 11 and the liquid separation filter core 52 as illustrated in Fig. 4. The liquid separation filter core 52 has an element portion having a multilayer structure including the first element portion 12 and the liquid separation constituent 30, and the first element portion 12 is housed in the liquid separation constituent 30.

Here, a method of assembling the liquid separation constituent 30, that is, a method of producing a liquid separation filter (liquid separation filter core 52) having a multilayer structure will be described.

The existing liquid separation filter 10 to which the liquid separation constituent 30 is to be attached is in the state of Fig. 2. In the existing liquid separation filter 10, the insertion portion 18b of the upper end holding portion 18 of the first element portion 12 is in a state of being inserted into the through hole 15a of the top plate 15, and the abutting portion 18a of the upper end holding portion 18 is in a state of abutting on the lower surface of the top plate 15. In this state, the first element portion 12 is restrained with respect to the top plate 15 by use of the fixture 13.

In the liquid separation filter 10, by removing the pressing portion 13e constituting the fixture 13 from an upper end of the shaft portion 13d, the shaft portion 13d is removed from the first pressing portion 13a. By the above, restraint of the first element portion 12 on the top plate 15 via the first pressing portion 13a and the second pressing portion 13b of the restraining portion 13c is released. Then, the upper end holding portion 18 (first element portion 12) is removed from the top plate 15 such that the insertion portion 18b of the first element portion 12 is removed from the through hole 15a of the top plate 15. By the above, abutment of the abutting portion 18a (first element portion 12) on the top plate 15 is released, and the through hole 15a of the top plate 15 is opened (Fig. 6).

Subsequently, the liquid separation constituent 30 is attached to the top plate 15 in a state where the through hole 15a is opened. Specifically, the liquid separation constituent 30 is positioned with respect to the top plate 15 such that the annular positioning portion 39 of the first attachment portion 32 located at an upper portion of the liquid separation constituent 30 is inserted into the through hole 15a from below (Fig. 7). At this time, the annular abutting portion 37 of the second element portion 31 abuts on the lower surface of the top plate 15.

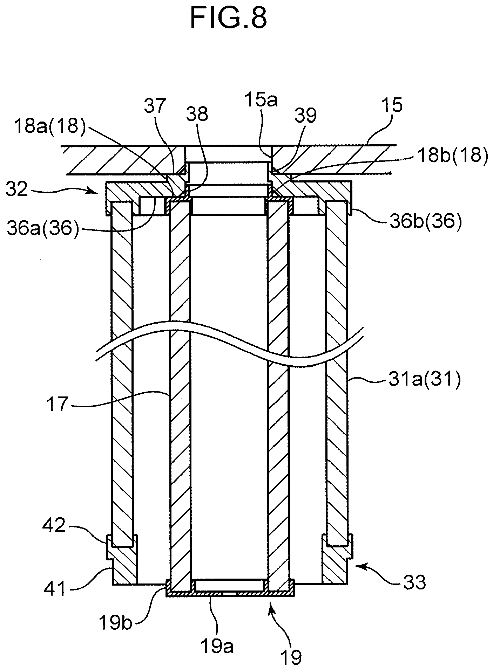

Next, the removed first element portion 12 is inserted into the second element portion 31 of the liquid separation constituent 30. At this time, the insertion portion 18b of the upper end holding portion 18 of the first element portion 12 is inserted into the hole portion 38 provided in the first attachment portion 32 of the liquid separation constituent 30, and the abutting portion 18a of the first element portion 12 is caused to abut on the annular abutting portion 37 of the liquid separation constituent 30. By the above, the first attachment portion 32 of the liquid separation constituent 30 is sandwiched between the top plate 15 and the abutting portion 18a of the first element portion 12, and the position of the first element portion 12 with respect to the second element portion 31 is determined. By the above, as illustrated in Fig. 8, the first element portion 12 is covered with the second element portion 31, and the second fiber layer 31a surrounds the first fiber layer 17.

Subsequently, the shaft portion 13d of the fixture 13 is inserted into a central hole of the lower end holding portion 19 of the first element portion 12 from below, and passes through the through hole 15a of the top plate 15. Then, an upper end of the shaft portion 13d is inserted into a hole of the first pressing portion 13a. Then, as the pressing portion 13e is attached to an upper end of the shaft portion 13d protruding upward from the first pressing portion 13 a, the first element portion 12 and the liquid separation constituent 30 are held by the first pressing portion 13a and the second pressing portion 13b. That is, the first element portion 12 and the top plate 15 are fixed to each other by the fixture 13. At this time, the first attachment portion 32 of the liquid separation constituent 30 is sandwiched between the top plate 15 and the upper end holding portion 18 of the first element portion 12. Note that, instead of the fixture 13, the first element portion 12 and the liquid separation constituent 30 may be fixed to the top plate 15 by the same type of fixture as the fixture 13.

Then, as the liquid storage portion 45 is attached to the non-element portion 41 of the second attachment portion 33 of the liquid separation constituent 30, a liquid separation filter (the liquid separation filter core 52) having a multilayer structure illustrated in Fig. 4 is completed. In the liquid separation filter core 52, liquid can be further separated from gas after liquid is separated in the first element portion 12.

As described above, according to the present embodiment, a multilayer structure of the first element portion 12 can be realized with a relatively simple configuration while an attachment structure of the first element portion 12 to the top plate 15 is used.

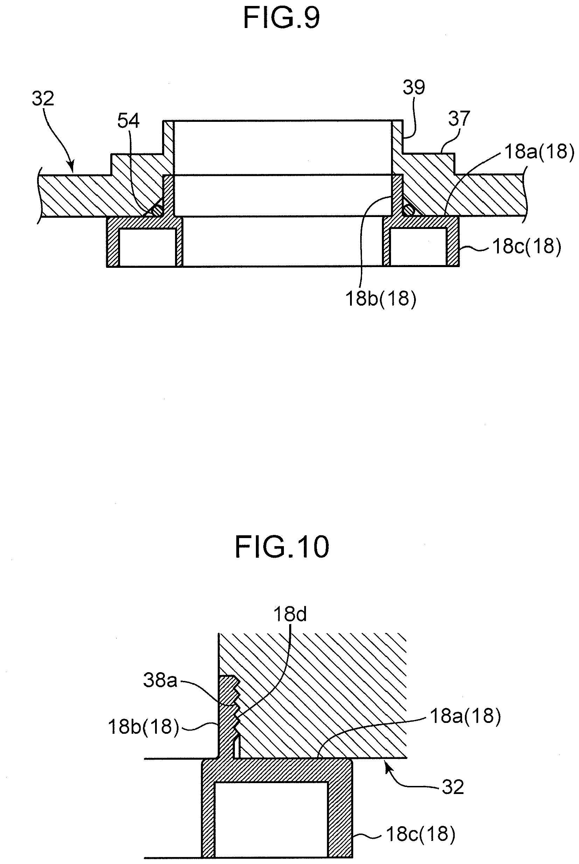

Note that, as illustrated in Fig. 9, in a case where the annular abutting portion 37 has a shape that forms a minute space between the annular abutting portion 37, the insertion portion 18b, and the abutting portion 18a, a sealing ring 54 may be disposed in the minute space. In a case of this configuration, it is possible to prevent gas leakage from a gap between the annular abutting portion 37 and the insertion portion 18b.

In the present embodiment, the first element portion 12 is fixed to the top plate 15 by use of the fixture 13. However, the present embodiment is not limited to this configuration. For example, coupling of the insertion portion 18b of the first element portion 12 to the top plate 15 may be screw coupling, and the fixture 13 may be omitted. In this case, as illustrated in Fig. 10, a male screw 18d is cut on an outer peripheral surface of the insertion portion 18b, and a female screw into which the male screw 18d can be screwed is cut in the through hole 15a of the top plate 15. Therefore, in this case, the female screw 38a into which the male screw 18d can be screwed is also cut on an inner peripheral surface of the hole portion 38 of the first attachment portion 32. With this configuration, the first element portion 12 can be attached to and detached from the top plate 15 and the liquid separation constituent 30 without use of the fixture 13. Further, in this case, a gasket (not illustrated) for preventing gas from leaking from between the insertion portion 18b and the annular abutting portion 37 may be provided.

### (Second embodiment)

In the first embodiment, the liquid separation constituent 30 for a multilayer structure of the first element portion 12 in which the insertion portion 18b is provided in the upper end holding portion 18 is configured. On the other hand, in the second embodiment, the liquid separation constituent 30 used by covering the first element portion 12 in which the insertion portion 18b of the upper end holding portion 18 is omitted is configured. Here, the same constituent elements as those of the first embodiment are denoted by the same reference numerals, and omitted from detailed description.

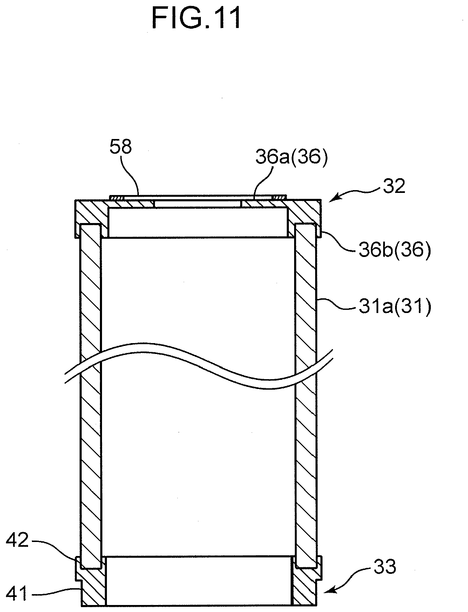

As illustrated in Fig. 11, the liquid separation constituent 30 according to the second embodiment includes the second element portion 31, the first attachment portion 32, and the second attachment portion 33 as in the first embodiment. However, in the first attachment portion 32, the annular abutting portion 37 abutting on the top plate 15 is omitted, and an inner diameter of the annular holding portion 36 that holds an upper end portion of the second element portion 31 has size corresponding to an inner diameter of the through hole 15a of the top plate 15 of the housing container 11 to be attached. Further, the positioning portion 39 is also omitted. For this reason, the first attachment portion 32 is not in contact with the top plate 15 even when the liquid separation constituent 30 is attached to the housing container 11.

The liquid separation constituent 30 includes an annular gasket 58 disposed on an upper surface of the main body portion 36a of the holding portion 36 of the first attachment portion 32.

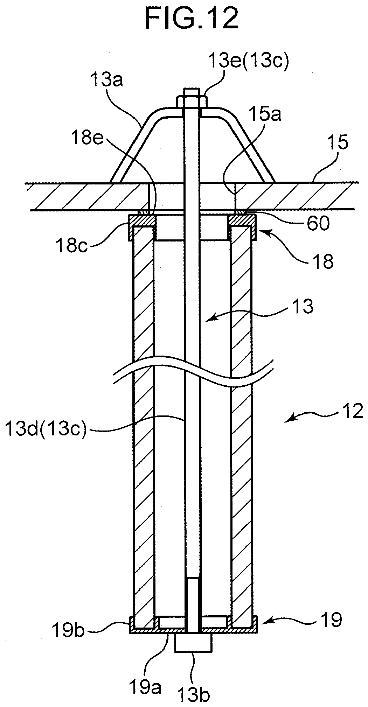

In the first element portion 12 to which the liquid separation constituent 30 is to be attached, as illustrated in Fig. 12, the insertion portion 18b of the upper end holding portion 18 is omitted. Then, the upper end holding portion 18 is provided with an annular support portion 18e instead of the abutting portion 18a. An upper surface of the support portion 18e does not abut on the top plate 15, and an annular gasket 60 is disposed between an upper surface of the support portion 18e and a lower surface of the top plate 15. A pair of the clamping portions 18c for holding the first fiber layer 17 projects downward from the support portion 18e.

Here, a method of assembling the liquid separation constituent 30, that is, a method of producing a liquid separation filter (liquid separation filter core 52) having a multilayer structure will be described.

The existing liquid separation filter 10 to which the liquid separation constituent 30 is to be attached is in a state of Fig. 12. In the existing liquid separation filter 10, the first element portion 12 is restrained with respect to the top plate 15 by use of the fixture 13. However, unlike the first embodiment, the first element portion 12 is not in contact with the top plate 15.

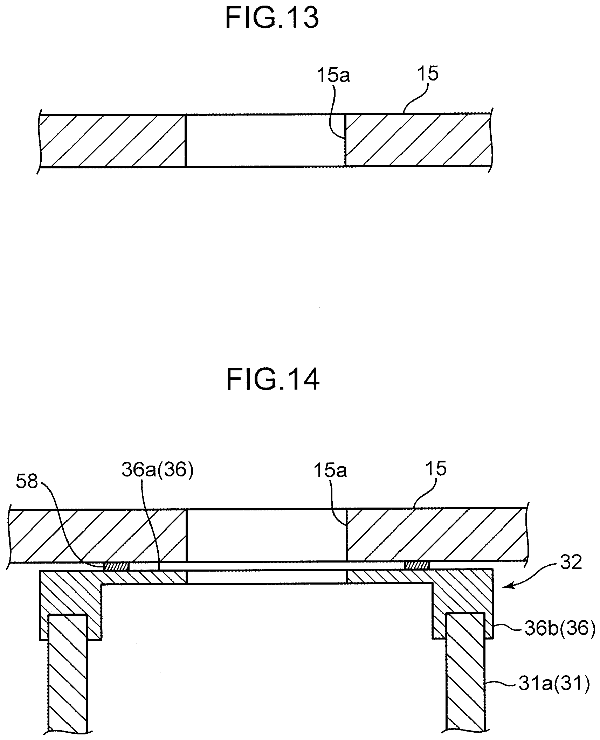

In the liquid separation filter 10, by removing the pressing portion 13e constituting the fixture 13 from an upper end of the shaft portion 13d, the shaft portion 13d is removed from the first pressing portion 13a. By the above, restraint of the first element portion 12 on the top plate 15 via the first pressing portion 13a and the second pressing portion 13b of the restraining portion 13c is released, and the upper end holding portion 18 (first element portion 12) is removed from the top plate 15. By the above, the through hole 15a of the top plate 15 is opened (Fig. 13).

The liquid separation constituent 30 is attached to the top plate 15 in a state where the through hole 15a is opened. Specifically, in a state where the annular gasket 58 disposed on an upper surface of the first attachment portion 32, the holding portion 36 (first attachment portion 32) is positioned such that a central opening of the holding portion 36 is aligned with the through hole 15a of the top plate 15 (Fig. 14). At this time, the gasket 58 is sandwiched between the top plate 15 and the first attachment portion 32.

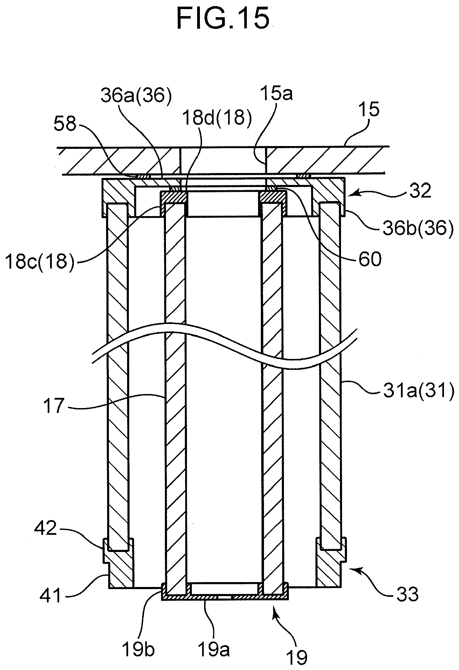

Next, the removed first element portion 12 is inserted into the second element portion 31 of the liquid separation constituent 30. At this time, the gasket 60 is disposed between the upper end holding portion 18 of the first element portion 12 and the first attachment portion 32 of the liquid separation constituent 30. By the above, as illustrated in Fig. 15, the first element portion 12 is covered with the second element portion 31, and the second fiber layer 31a surrounds the first fiber layer 17.

Subsequently, the shaft portion 13d of the fixture 13 is inserted into a central hole of the lower end holding portion 19 of the first element portion 12 from below, and passes through the through hole 15a of the top plate 15. Then, an upper end of the shaft portion 13d is inserted into a hole of the first pressing portion 13a. Then, the pressing portion 13e is attached to an upper end of the shaft portion 13d protruding upward from the first pressing portion 13a. By the above, the first element portion 12 and the liquid separation constituent 30 are held by the first pressing portion 13a and the second pressing portion 13b. That is, the first element portion 12 and the top plate 15 are fixed to each other by the fixture 13. At this time, the first attachment portion 32 of the liquid separation constituent 30 is sandwiched between the top plate 15 and the upper end holding portion 18 of the first element portion 12.

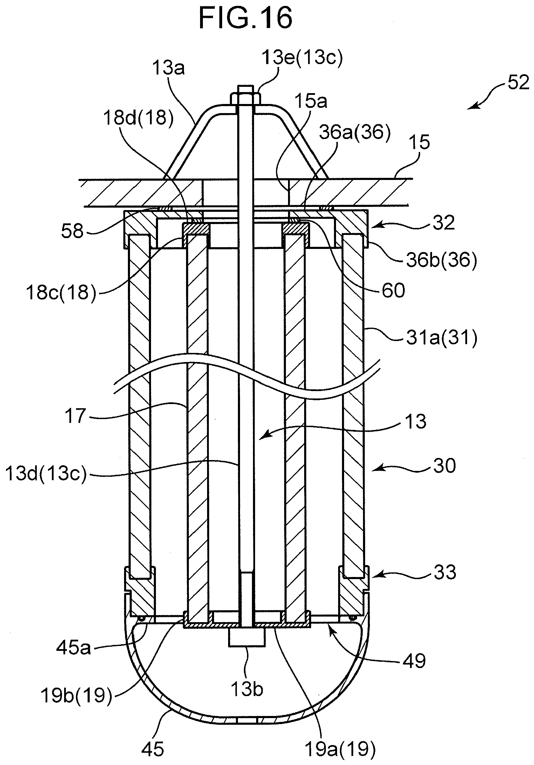

In this state, as the liquid storage portion 45 is attached to the non-element portion 41 of the second attachment portion 33 of the liquid separation constituent 30, a liquid separation filter (the liquid separation filter core 52) having a multilayer structure illustrated in Fig. 16 is completed. In the liquid separation filter core 52, liquid can be further separated from gas after liquid is separated in the first element portion 12.

Therefore, according to the present embodiment, a multilayer structure of the first element portion 12 can be realized with a relatively simple configuration while an attachment structure of the first element portion 12 to the top plate 15 is used.

Note that, although other configurations, operations, and effects are not described, the description of the first embodiment can be applied to the second embodiment.

It should be understood that the embodiment disclosed herein is illustrative in all respects and is not restrictive. The present invention is not limited to the above embodiment, and various modifications, improvements, and the like can be made without departing from the gist of the present invention.

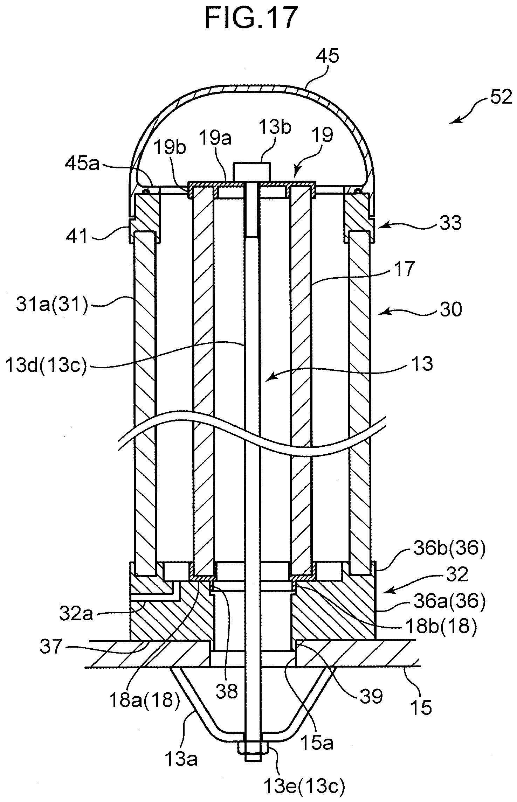

For example, as illustrated in Fig. 17, the liquid separation filter core 52 may be attached to the upper side of the top plate 15 in a vertically inverted state. That is, the first attachment portion 32 may be attached to a lower end portion of the second element portion 31, and the second attachment portion 33 may be attached to an upper end portion of the second element portion 31. In this case, since the first attachment portion 32 is located on the upper side of the top plate 15, the annular abutting portion 37 abuts on an upper surface of the top plate 15. Further, the upper end holding portion 18 and the lower end holding portion 19 of the first element portion 12 are arranged at positions vertically opposite to those in the case of Figs. 2 and 4. At this time, the abutting portion 18a of the upper end holding portion 18 (that is, in the first element portion 12, a holding portion located on the top plate 15 side with respect to the first fiber layer 17) is disposed so as to abut on the upper surface of the top plate 15 in a state before the liquid separation constituent 30 is attached. The fixture 13 sandwiches the first fiber layer 17 between the top plate 15 and the lower end holding portion 19 (that is, in the first element portion 12, a holding portion located on the side opposite to the top plate 15 with respect to the first fiber layer 17).

Note that, in this case, the liquid storage portion 45 does not need to play a role of holding liquid, that is, may be simply used as a cap portion. Furthermore, the liquid storage portion 45 and the non-element portion 41 may be formed of the same member. Further, the first attachment portion 32 may be provided with a liquid discharge flow path 32a. The same applies to the liquid separation constituent 30 in Fig. 16.

The liquid separation filter core 52 in Fig. 4 may be configured to separate liquid from gas before liquid is separated in the first element portion 12. Further, the same applies to the liquid separation filter core 52 of Fig. 16. That is, gas may flow from the outside of the second fiber layer 31a toward the first fiber layer 17 of the first element portion 12, and then pass through the through hole 15a of the top plate 15.

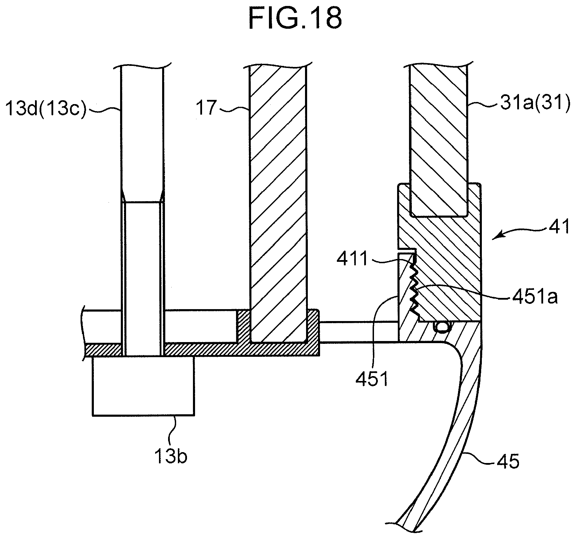

As illustrated in Fig. 18, the liquid storage portion 45 (cap portion 45) may be provided with an annular protruding portion 451 protruding upward. A male screw portion 451a is provided on an outer surface of the protruding portion 451. The non-element portion 41 is provided with a female screw portion 411 on the inner surface. As the male screw portion 451a and the female screw portion 411 are screwed, the liquid storage portion 45 is fixed to the non-element portion 41.

Here, the embodiment will be outlined.
(1) A liquid separation constituent according to the embodiment is a liquid separation constituent used with being attached to a top plate. The liquid separation constituent includes a second element portion having a tubular shape and including a fiber layer for separating liquid from gas discharged from a compressor, an annular first attachment portion to which a first end portion of the second element portion is attached, and a second attachment portion to which a second end portion of the second element portion is attached. A first element portion having a fiber layer for separating liquid from gas discharged from the compressor can be attached to and detached from the top plate. The first element portion includes an abutting portion configured to abut on a first surface of the top plate, and an insertion portion detachably inserted into a through hole formed in the top plate. The first attachment portion includes a hole portion configured to receive the insertion portion of the first element portion removed from the top plate, and an annular abutting portion provided around the hole portion and configured to abut on the first surface of the top plate from which the first element portion is removed.
   According to the liquid separation constituent according to the embodiment, it is possible to realize a multilayer structure of the element portion in an existing liquid separation filter with a relatively simple configuration while using an attachment structure of the first element portion to the top plate.
(2) The first attachment portion may include a positioning portion configured to position the first attachment portion with respect to the through hole by being inserted into the through hole of the top plate. In this aspect, the second element portion can be easily positioned with respect to the through hole.
(3) The annular abutting portion may have a shape capable of forming a minute space between the insertion portion and the annular abutting portion. In this case, the liquid separation constituent may further include a sealing ring arranged in the minute space. In this aspect, it is possible to prevent gas leakage from a gap between the annular abutting portion and the insertion portion.
(4) A liquid separation constituent according to the present embodiment is a liquid separation constituent used with being attached to a top plate. The liquid separation constituent includes a second element portion having a tubular shape and including a second fiber layer which is a fiber layer for separating liquid from gas discharged from a compressor, an annular first attachment portion to which a first end portion of the second element portion is attached, and a second attachment portion to which a second end portion of the second element portion is attached. A first element portion having a first fiber layer that is a fiber layer for separating liquid from gas discharged from the compressor can be attached to and detached from the top plate by a fixture. The first element portion includes a holding portion that holds a first end portion of the first fiber layer. The first attachment portion is disposed between the first element portion and the top plate in a state where restraint on the top plate by the fixture is released, and is configured to be fixed to the top plate by attachment of the holding portion to the top plate by the fixture or one of a same type as the fixture. The liquid separation constituent includes an annular gasket disposed on a surface facing the top plate in the first attachment portion.
   According to the liquid separation constituent according to the embodiment, it is possible to realize a multilayer structure of the element portion in an existing liquid separation filter with a relatively simple configuration while using an attachment structure of the first element portion to the top plate.
(5) The first element portion may include a second end holding portion that holds a second end portion of the first fiber layer. In this case, the fixture may include a first pressing portion configured to abut on the top plate, a second pressing portion configured to abut on the second end holding portion, and a restraining portion configured to restrain the first pressing portion and the second pressing portion so that the first pressing portion and the second pressing portion sandwich the top plate, the first attachment portion, the second end holding portion, and the first element portion.
(6) The second attachment portion may include a non-element portion extending in a cylindrical shape at the second end portion, and a cap portion screwed to the non-element portion. In this aspect, the non-element portion can be fixed by screwing.
(7) The first attachment portion may further include a holding portion that holds the second element portion such that a gap is formed between the first element portion and the second element portion in the radial direction. Further, the second attachment portion may further include a liquid storage portion having an opening portion immediately below the gap and configured to hold liquid flowing down through the opening portion. In this aspect, it is possible to prevent liquid from accumulating in the element portion.
(8) The liquid separation constituent may further include a discharge mechanism for discharging liquid in the liquid storage portion. In this aspect, it is possible to prevent increase in size of the liquid separation filter as compared with a structure in which liquid continues to be accumulated. Further, increase in weight of the liquid separation constituent due to increase in amount of liquid is also prevented.
(9) The liquid separation filter according to the embodiment is a liquid separation filter for separating liquid from gas discharged from a compressor, and includes a housing container having a gas inlet and a gas outlet, and a liquid separation filter core housed in the housing container. The liquid separation filter core includes a first element portion having a fiber layer, and the liquid separation constituent capable of housing the first element portion in the inside. The second element portion of the liquid separation constituent is disposed so as to surround the first element portion, and is configured to further separate liquid from gas after liquid is separated in the first element portion or to separate liquid from gas before liquid is separated in the first element portion.
   According to the liquid separation filter according to the embodiment, it is possible to produce a liquid separation filter having multiple element portions with a relatively simple configuration.
(10) A compressor system according to the embodiment includes a compressor, a liquid recovery device configured to collect liquid from discharge gas discharged from the compressor, and the liquid separation filter that is provided on the downstream side of the liquid recovery device and configured to separate liquid from the discharge gas.
   According to the compressor system of the embodiment, it is possible to efficiently separate liquid in gas. For example, in a case of a compressor for compressing hydrogen gas, the compressor system contributes to efficient collection or supply of hydrogen gas.
(11) A method of producing a liquid separation filter having a multilayer structure according to the embodiment is a method of producing a liquid separation filter having a multilayer structure by causing a first element portion attached to a top plate to have multiple layers, the first element portion including an insertion portion, an abutting portion, and a fiber layer configured to separate liquid from gas discharged from a compressor. The method includes releasing abutment of the abutting portion on the top plate by removing the insertion portion from the through hole from a state in which the insertion portion of the first element portion is inserted into a through hole formed in the top plate and the abutting portion of the first element portion abuts on a first surface of the top plate, preparing a liquid separation constituent including a second element portion and a first attachment portion to which a first end portion of the second element portion is attached, the first attachment portion having an annular abutting portion, causing the annular abutting portion to abut on the first surface of the top plate, and the abutting portion of the first element portion to abut on the annular abutting portion, so that the first element portion is covered with the second element portion, and holding the first attachment portion between the top plate and the abutting portion of the first element portion.
(12) A method of producing a liquid separation filter having a multilayer structure according to the embodiment is a method of producing a liquid separation filter having a multilayer structure by causing a first element portion attached to a top plate to have multiple layers, the first element portion including a fiber layer configured to separate liquid from gas discharged from a compressor. The method includes releasing fixation of the first element portion by a fixture from a state in which the first element portion is located on a first side of the top plate and the first element portion is fixed to the top plate by the fixture, preparing a liquid separation constituent including a second element portion and a first attachment portion to which a first end portion of the second element portion is attached, sandwiching the first attachment portion between the first element portion and the top plate while the first element portion is covered with the second element portion, and at this time, sandwiching an annular gasket between the first attachment portion and the top plate, and the first element portion and the top plate are fixed to each other in a state where the first attachment portion is sandwiched by the fixture or one of the same type as the fixture.

As described above, liquid separation performance of an element portion can be improved for an existing liquid separation filter.

This application is based on Japanese Patent application No. 2022-199405 filed in Japan Patent Office on December 14, 2022, the contents of which are hereby incorporated by reference.

Although the present invention has been fully described by way of example with reference to the accompanying drawings, it is to be understood that various changes and modifications will be apparent to those skilled in the art. Therefore, unless otherwise such changes and modifications depart from the scope of the present invention hereinafter defined, they should be construed as being included therein.
A liquid separation constituent is used with being attached to a top plate to and from which a first element portion is attachable and detachable, and includes a second element portion having a fiber layer, an annular first attachment portion to which an upper end portion of the second element portion is attached, and a second attachment portion to which a lower end portion of a second element portion is attached. The first element portion includes an abutting portion abutting on the top plate and an insertion portion inserted into a through hole of the top plate. The first attachment portion includes a hole portion into which the insertion portion of the first element portion removed from the top plate is insertable, and an annular abutting portion abutting on a lower surface of the top plate from which the first element portion is removed.

## Claims

1. A liquid separation constituent (30) used with being attached to a top plate (15), the liquid separation constituent (30) comprising:
a second element portion (31) having a tubular shape and including a fiber layer (31a) for separating liquid from gas discharged from a compressor (2);
an annular first attachment portion (32) to which a first end portion of the second element portion (31) is attached; and
a second attachment portion (33) to which a second end portion of the second element portion (31) is attached, wherein
a first element portion (12) having a fiber layer (17) for separating liquid from gas discharged from the compressor (2) can be attached to and detached from the top plate (15),
the first element portion (12) includes:
an abutting portion (18a) configured to abut on a first surface of the top plate (15); and
an insertion portion (18b) detachably inserted into a through hole (15a) formed in the top plate (15), and
the first attachment portion (32) includes:
a hole portion (38) configured to receive the insertion portion (18b) of the first element portion (12) removed from the top plate (15); and
an annular abutting portion (37) provided around the hole portion (38) and configured to abut on the first surface of the top plate (15) from which the first element portion (12) is removed.

2. The liquid separation constituent (30) according to claim 1, wherein the first attachment portion (32) includes a positioning portion (39) configured to position the first attachment portion (32) with respect to the through hole (15a) by being inserted into the through hole (15a) of the top plate (15).

3. The liquid separation constituent (30) according to claim 1 or 2, wherein
the annular abutting portion (37) has a shape capable of forming a minute space between the insertion portion (18b) and the annular abutting portion (37),
the liquid separation constituent (30) further comprising a sealing ring (54) disposed in the minute space.

4. A liquid separation constituent (30) used with being attached to a top plate (15), the liquid separation constituent (30) comprising:
a second element portion (31) having a tubular shape and including a second fiber layer (31a) that is a fiber layer for separating liquid from gas discharged from a compressor (2);
an annular first attachment portion (32) to which a first end portion of the second element portion (31) is attached; and
a second attachment portion (33) to which a second end portion of the second element portion (31) is attached, wherein
a first element portion (12) having a first fiber layer (17) that is a fiber layer for separating liquid from gas discharged from the compressor (2) can be attached to and detached from the top plate (15) by a fixture (13),
the first element portion (12) includes a holding portion (36) that holds a first end portion of the first fiber layer (17),
the first attachment portion (32) is disposed between the top plate (15) and the first element portion (12) in a state where restraint on the top plate (15) by the fixture (13) is released, and is configured to be fixed to the top plate (15) by attachment of the holding portion (36) to the top plate (15) by the fixture (13) or one of a same type as the fixture (13), and
the liquid separation constituent (30) includes an annular gasket (58) disposed on a surface facing the top plate (15) in the first attachment portion (32).

5. The liquid separation constituent (30) according to claim 4, wherein
the first element portion (12) has a second end holding portion (19) that holds a second end portion of the first fiber layer (17), and
the fixture (13) includes:
a first pressing portion (13a) configured to abut on the top plate (15);
a second pressing portion (13b) configured to abut on the second end holding portion (19); and
a restraining portion (13c) configured to restrain the first pressing portion (13a) and the second pressing portion (13b) so that the first pressing portion (13a) and the second pressing portion (13b) sandwich the top plate (15), the first attachment portion (32), the second end holding portion (19), and the first element portion (12).

6. The liquid separation constituent (30) according to claim 1 or 4, wherein
the second attachment portion (33) includes:
a non-element portion (41) extending in a cylindrical shape at the second end portion; and
a cap portion (45) screwed to the non-element portion (41).

7. The liquid separation constituent (30) according to claim 1 or 4, wherein
the first attachment portion (32) further includes a holding portion (36) that holds the second element portion (31) such that a gap is formed between the first element portion (12) and the second element portion (31) in a radial direction, and
the second attachment portion (33) further includes a liquid storage portion (45) having an opening portion (49) immediately below the gap and configured to hold liquid flowing down through the opening portion (49).

8. The liquid separation constituent (30) according to claim 7, further comprising a discharge mechanism (50) for discharging liquid in the liquid storage portion (45).

9. A liquid separation filter (10) for separating liquid from gas discharged from a compressor (2), the liquid separation filter (10) comprising:
a housing container (11) having a gas inlet (11a) and a gas outlet (11b); and
a liquid separation filter core (52) housed in the housing container (11), wherein
the liquid separation filter core (52) includes:
a first element portion (12) having a fiber layer (17); and
the liquid separation constituent (30) according to claim 1 or 4 capable of housing the first element portion (12) therein, and
the second element portion (31) of the liquid separation constituent (30) is disposed so as to surround the first element portion (12), and is configured to further separate liquid from gas after liquid is separated in the first element portion (12) or to separate liquid from gas before liquid is separated in the first element portion (12).

10. A compressor system (1) comprising:
a compressor (2);
a liquid recovery device (4) configured to collect liquid from discharge gas discharged from the compressor (2); and
a liquid separation filter (10) according to claim 9 that is provided on a downstream side of the liquid recovery device (4) and configured to separate liquid from the discharge gas.

11. A method of producing a liquid separation filter (10) having a multilayer structure by causing a first element portion (12) attached to a top plate (15) to have multiple layers,
the first element portion (12) including an insertion portion (18b), an abutting portion (18a), and a fiber layer (17) configured to separate liquid from gas discharged from a compressor (2), the method comprising:
releasing abutment of the abutting portion (18a) on the top plate (15) by removing the insertion portion (18b) from the through hole (15a) from a state in which the insertion portion (18b) of the first element portion (12) is inserted into a through hole (15a) formed in the top plate (15) and the abutting portion (18a) of the first element portion (12) abuts on a first surface of the top plate (15);
preparing a liquid separation constituent (30) including a second element portion (31) and a first attachment portion (32) to which a first end portion of the second element portion (31) is attached, the first attachment portion (32) having an annular abutting portion (37);
causing the annular abutting portion (37) to abut on the first surface of the top plate (15), and the abutting portion (18a) of the first element portion (12) to abut on the annular abutting portion (37), so that the first element portion (12) is covered with the second element portion (31); and
holding the first attachment portion (32) between the top plate (15) and the abutting portion (18a) of the first element portion (12).

12. A method of producing a liquid separation filter (10) having a multilayer structure by causing a first element portion (12) attached to a top plate (15) to have multiple layers,
the first element portion (12) including a fiber layer (17) configured to separate liquid from gas discharged from a compressor (2), the method comprising:
releasing fixation of the first element portion (12) by a fixture (13) from a state in which the first element portion (12) is located on a first side of the top plate (15) and the first element portion (12) is fixed to the top plate (15) by the fixture (13);
preparing a liquid separation constituent (30) including a second element portion (31) and a first attachment portion (32) to which a first end portion of the second element portion (31) is attached;
sandwiching the first attachment portion (32) between the first element portion (12) and the top plate (15) while the first element portion (12) is covered with the second element portion (31), and at this time, sandwiching an annular gasket (58) between the first attachment portion (32) and the top plate (15); and
the first element portion (12) and the top plate (15) are fixed to each other in a state where the first attachment portion (32) is sandwiched by the fixture (13) or one of a same type as the fixture (13).
